Europäisches Patentamt

**European Patent Office**

Office européen des brevets

(19)

(11) Publication number: **0 112 318**
A2

(12)

# EUROPEAN PATENT APPLICATION

(21) Application number: **83850340.7**

(22) Date of filing: **21.12.83**

(51) Int. Cl.³: **D 04 C 1/12**
**D 07 B 1/00**

(30) Priority: **22.12.82 SE 8207321**

(43) Date of publication of application:
**27.06.84 Bulletin 84/26**

(84) Designated Contracting States:
**IT**

(71) Applicant: **Ivarsson, Sune**
**Gamla Edsvägen 19**
**S-668 00 ED(SE)**

(72) Inventor: **Ivarsson, Sune**
**Gamla Edsvägen 19**
**S-668 00 ED(SE)**

(74) Representative: **Roth, Ernst Adolf Michael et al,**
**GÖTEBORGS PATENTBYRA AB Box 5005**
**S-402 21 Göteborg(SE)**

(54) **Use of a looped rope.**

(57) Use of a looped rope (1) consisting of at least two yarns, threads, ropes or strands or bundles thereof (2, 3) which are crochetted together thus that the rope consists of a contiuous series of loops (4,4a,4b,4c), which two and two are interconnected by a narrow interconnecting rib, as a connecting member for lashing, anchoring, attachment, transport, towing or the like whereby the rope easily can be arranged as a running noose (5) or self-locking (6) without knots or splicing.

EP 0 112 318 A2

Croydon Printing Company Ltd.

## Use of a looped rope

### Background of the invention

In many fields, such as e.g. transport industry, building industry, agriculture, for cars, boats etcetera, there is a need for elongated elements for lashing, anchoring, attachment, transport and towing. Conventional ropes, chains, wires and the like are generally used for such purposes, and for being attachable to the elements that shall be lashed, located, attached, transported or towed these ropes, chains, etcetera must these elements be tied manually and/or be equipped with more or less sophisticated connecting members.

At attachment by means of tying or splicing it is often required a particular skill for placing the knots in an intended position and preventing them from being able to slide to an undesired extent and the particular connecting members mean a cost increase at the same time as they in many cases are arranged at predetermined, not adjustable positions along the elongated element. This means in all cases drawbacks at the fitting of the member in question, as well concerning the time required for bringing about the attachment as regarding the possibility of obtaining attachment points which are positionally well adapted to the requirement.

It has earlier by Swedish patent specification 7702420-6 been proposed to produce textile healds for looms, as a continuous series of loops which are interconnected by single ribs, whereby two loops are attached to the shaft frames and an intermediate loop is allowed to serve as heald eyelet. These lengths of textile helads are produced in a hoisery machine, whereby two threads are crochetted to form the loops, whereby the threads are brought alongside each other and loops situated just opposite each other in the two threads are crochetted together at certain positions along the length of the two threads thus that a rib in each loop engages in and is hooked around the corresponding rib in the opposite loop.

By Swedish patent specification 7805843-5 it has also been proposed a system for tying up a hand loom, whereby a similar crochet has been used.

## The purpose and most essential features of the invention

The invention has now for a purpose to provide an elimination of the above difficulties and drawbacks and this is achieved by using a looped rope as a connecting member for lashing, anchoring, attachment, transport, towing or the like without the use of knots or splicing, wherein the looped rope consists of at least two yarns, threads, ropes or strands or bundles thereof which are crochetted together thus that the rope consists of a contiuous series of loops, which two and two are interconnected by a narrow interconnecting rib, whereby the rope easily can be arranged as a running noose or self-locking.

## Description of the drawings

The invention will hereinafter be further described with reference to embodiments shown in the accompanying drawings.

Figure 1 shows a portion of a looped rope intended to be used according to the invention.
Figure 2 shows such a looped rope arranged as a running noose, and,
Figure 3 shows arrangement as a self-locking loop.

## Description of the embodiments

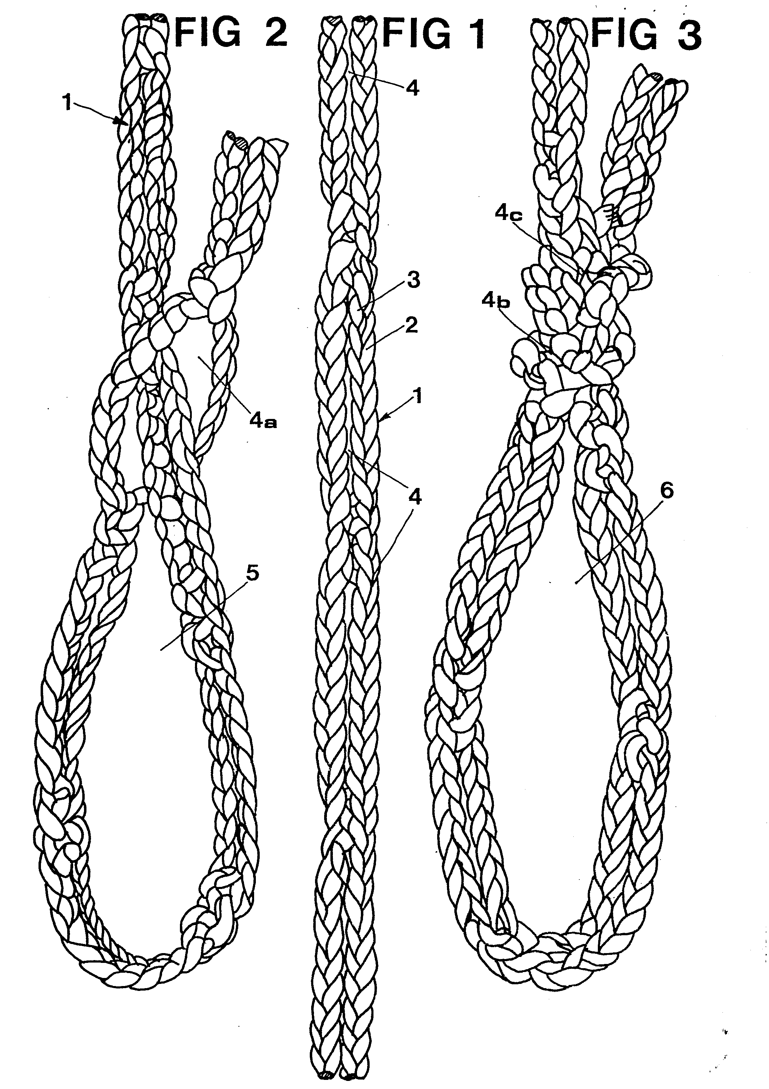

Figure 1 shows a looped rope or a running and-locking rope 1 or a runlock rope produced in a manner known per se thereby that two ropes 2, crochetted from bundles of threads 3 in a hoisery machine are crochetted together thus that the rope consists of a series of loops 4, preferably of the same size.

In figure 2 is shown how the looped rope in a simple manner can be arranged as a running noose 5, by letting the rope pass through a loop 4a.

The rope can just as simple, such as shown in figure 3, be arranged in a self-locking loop 6, whereby a part of the rope 1 is at first allowed to pass through a loop 4b, whereupon a loop 4c in the part of the rope which has passed through loop 4b is allowed to enclose the part of the rope, which extends away from the first loop 4b. In this manner is obtained a loop 6 which is run proof and safe. The connections can in both cases be provided without tying or splicing and without the need of using separate connecting members, or especial connecting members integral with the elongated elements.

As examples of different fields of use can be mentioned transport industry where runlock ropes can be used according to the invenmtion for lashing and arresting cargo for air, sea or lorry transport, but also for lashing and arresting of covers and tarpaulins.

In building industry it can replace conventional ropes, chains and cables at lifts, lashing and the like.

The runlock rope can in forestry and at hunting be used to replace steel-wire as heaving line at manual logging and as hauling rope when hauling cloven-footed game to carriageway.

The runlock rope is also well suited for towing vehicles and boats and for anchoring purposes, as lashing, ship fender rope and the like.

The runlock rope can be used for a wide range of purposes in the leisure area and the runlock rope is suitable as life-saving, safety or life line within several areas.

This looped rope or runlock rope can so to a very large extent replace conventional ropes, chains and wires with an increased, improved and more safe use, and with unique properties as regards self-locking, marling and lashing without use of knots, splicing or additional connecting members.

## CLAIMS

Use of a looped rope (1) as a connecting member for lashing, anchoring, attachment, transport, towing or the like without the use of knots or splicing,

c h a r a c t e r i z e d  t h e r e b y,

that the looped rope (1) consists of at least two yarns, threads, ropes or strands or bundles thereof (2,3) which are crochetted together thus that the rope consists of a contiuous series of loops (4,4a,4b,4c), which two and two are interconnected by a narrow interconnecting rib, whereby the rope easily can be arranged as a running noose (5) or self-locking (6).

0112318

FIG 2    FIG 1    FIG 3